# EUROPÄISCHE PATENTANMELDUNG

(11) **EP 1 431 109 A1**
(43) Veröffentlichungstag der Anmeldung: **23.06.2004**
(21) Anmeldenummer: 03104453.0
(22) Anmeldetag: 28.11.2003
(51) Int. Cl.: B60N 2/48, F42B 3/04

(54) **Pyrotechnisch aktivierbare Kopfstütze**

(30) Priorität: 29.11.2002 AT 83902 U
(71) Anmelder: Hirtenberger Automotive Safety GmbH, 2552 Hirtenberg (AT)
(72) Erfinder: Aigner, Kurt, 1130 Wien (AT); Marker, Ludwig, 2560 Grillenberg (AT)
(74) Vertreter: Müllner, Erwin, Dr.

(57) **Zusammenfassung**

In Fahrzeugen ist zur Vermeidung von Verletzungen der Halswirbelsäule in die Kopfstütze (17) eine Mechanik eingebaut, um bei einem Heckaufprall die Kopfstütze (17) in Richtung Insassenkopf zu verlagern. Die Mechanik steht mit einem Gasgenerator (7) mit einer Kolbenstange (8) in Verbindung, um mit einer Crasherkennung die Verlagerung der Kopfstütze (17) im Fall eines Unfalls auszulösen. Der Gasgenerator (7) und die Mechanik sind erfindungsgemäß in der Kopfstütze (17) untergebracht. Dadurch wird eine kompakte Bauform erreicht, die sich auch für eine Nachrüstung eignet, ohne dass der gesamte Sitz getauscht werden muss.

## Beschreibung

Die Erfindung betrifft eine pyrotechnisch aktivierbare Kopfstütze mit einer Crasherkennung, einer Pyrotechnik und einer die Kopfstütze verschiebenden Mechanik.

Bei Heckaufprallunfällen tritt eine Verletzung der Halswirbelsäule, das so genannte Peitschenschlagsyndrom (engl. Whiplash) auf. Ursache hierfür ist zumeist ein zu großer Abstand zwischen Kopf und Kopfstütze. Durch die Rückwärtsbewegung des Kopfes während der Beschleunigung des Fahrzeuges durch den Heckaufprall treten verschiedene Verletzungen auf. Zuerst werden einzelne Halswirbel gegeneinander verschoben und es treten zu hohe lokale Dehn- und Stauchbelastungen einzelner Bandscheiben auf. Diese Überbelastungen treten insbesondere dann auf, wenn der lineare Bewegungsspielraum der Halswirbelsäule erschöpft ist und die Rotation des Kopfes beginnt. Es sind Anti-Whiplash-Systeme bekannt, die in die Sitzlehne eingebaut sind und die Kopfstütze über ihre Trägerholme nach vorne bewegen. Dies sind meist passive Systeme (Volvo, Saab), bei denen durch die Rückverlagerung des Insassen in den Sitz bei Heckaufprall über eine Wippe die Kopfstütze nach vorne verlagert wird. Die Schutzwirkung dieser Systeme ist besonders von Größe und Gewicht des Insassen sowie der Unfallschwere abhängig. Nachteilig ist, dass die Bewegung passiv, d.h. über die Körperverlagerung aktiviert wird und sich zu diesem Zeitpunkt der Kopf bereits deutlich aus seiner Ausgangslage entfernt hat. Weiters bieten diese Systeme bei leichten Unfällen aufgrund der geringeren Kräfte zur Aktivierung wenig Schutzwirkung. Diese Nachteile können durch den Einbau von Pyrotechnik zur Aktivierung zusammen mit einer entsprechenden Crasherkennung verhindert werden. Bekannte Systeme sind das so genannte Neck-Shield von Johnson Controls, Deutschland und die AKS (Crash aktive Kopfstütze) von Fa. Grammer, Deutschland, welche bei BMW-Modellen eingesetzt wird. Diese Systeme sind jedoch nur für besonders geräumige Fahrzeuge geeignet, da bei Kleinwägen der dafür notwendige Stauraum in der Rückenlehne fehlt. Durch beengte Platzverhältnisse fehlt der für Sicherheitssysteme benötigte Platz in der Rückenlehne, denn dieser Raum hinter den Sitzen der ersten Reihe wird für die Knie und Füße der Fondpassagiere genützt. Es ist daher nur eine dünne Sitzstruktur möglich.

Es ist weiters ein passives System bekannt, das in der Kopfstütze integriert ist. Dieses Schutzsystem verschiebt die Vorderseite der Kopfstütze mittels eines Hebelsystems bzw. Seilzugs, wobei der Seilzug durch die Rückverlagerung des Insassen betätigt wird. Dieses System weist jedoch ebenfalls die bekannten und bereits beschriebenen Nachteile von passiven Systemen, wie z.B. zu geringe Kräfte zur Aktivierung bei leichten Unfällen, auf.

Es ist Aufgabe der vorliegenden Erfindung, die genannten Nachteile zu beseitigen und auch eine Nachrüstmöglichkeit für herkömmliche Sitze zur Verfügung zu stellen.

Diese Aufgabe wird durch eine crashaktivierbare Kopfstütze der eingangs genannten Art erfindungsgemäß dadurch gelöst, dass die Mechanik und die Pyrotechnik in der Kopfstütze untergebracht sind. Durch die Verlagerung der gesamten für eine aktive Kopfstütze notwendigen Pyrotechnik und Mechanik in die Kopfstütze ist es möglich, auch moderne Kleinwagen standardmäßig mit der neuen Sicherheitstechnik auszurüsten bzw. ältere Fahrzeuge nachzurüsten.

Bei einer Aktivierung bzw. Auslösung des Gasgenerators bewegt sich die Vorderseite der Kopfstütze in Richtung des Insassen, die Position der Holme bleibt jedoch unverändert. Daher ist es vorteilhaft, wenn die Polsterung aus zwei durch die Pyrotechnik gegeneinander bewegbaren Polsterteilen besteht. Durch eine geteilte Polsterung wird sichergestellt, dass die blitzartig vorgeschobene Kopfstütze im Bereich der Berührungsfläche zwischen dem Kopf und der Kopfstütze während des Aufpralls nicht verschoben wird, denn durch die geteilte Ausführung wird eine Art Sollbruchstelle ausgebildet.

Es ist ferner zweckmäßig, wenn beide Polsterteile mit einem gemeinsamen Bezug umhüllt sind. Der gemeinsame Bezug stellt sicher, dass die Kopfstütze das übliche Aussehen hat.

Weiters ist es wichtig, dass der vordere Polsterteil durch die Pyrotechnik nach vorne oben bewegbar ist. Durch die Verlagerung der Kopfstütze nach vorne wird eine Rückwärtsbewegung des Kopfes während eines Heckaufpralls verhindert und durch die zusätzliche Aufwärtsbewegung der Kopfstütze wird einer extremen Komprimierung der Halswirbelsäule entgegengewirkt.

Gemäß einer ersten Ausführungsform der Erfindung ist vorgesehen, dass eine Frontplatte mit zwei Holmen jeweils über einen ersten Verbindungsstreifen und einen zweiten Verbindungsstreifen verbunden ist, wobei der erste Verbindungsstreifen und der zweite Verbindungsstreifen einander kreuzen und ein Gelenksviereck bilden, dass ein holmseitiges Ende jedes ersten Verbindungsstreifens drehbar mit dem jeweiligen Holm verbunden ist, ein holmseitiges Ende jedes zweiten Verbindungsstreifens mit jeweils einem Führungselement verbunden ist, welches an dem jeweiligen Holm verschiebbar ist, und dass die bewegliche Frontplatte von den ersten Verbindungsstreifen, den zweiten Verbindungsstreifen und einem Gasgenerator mit einer Kolbenstange geführt ist, wobei der Gasgenerator an einem Verbindungselement auf einer Trägerplatte befestigt ist und die Trägerplatte mit dem Verbindungselement starr an zumindest einem der Holme befestigt ist. Durch die teleskopische Wirkung der gekreuzten Verbindungsstreifen und die Führung der Frontplatte mit Hilfe des Gasgenerators ist eine kompakte und stabile Integration der aktiven Kopfstütze möglich.

Gemäß einer anderen Ausführungsform ist vorgesehen, dass eine Frontplatte mit zwei Holmen jeweils über einen ersten Verbindungsstreifen und einen zweiten Verbindungsstreifen verbunden ist, wobei der erste Verbindungsstreifen und der zweite Verbindungsstreifen einander kreuzen und ein Gelenksviereck bilden, dass ein holmseitiges Ende jedes ersten Verbindungsstreifens drehbar mit dem jeweiligen Holm verbunden ist, ein holmseitiges Ende jedes zweiten Verbindungsstreifens mit jeweils einem Führungselement verbunden ist, welches an dem jeweiligen Holm verschiebbar ist, dass die bewegliche Frontplatte von den ersten Verbindungsstreifen, den zweiten Verbindungsstreifen und einem Führungsstift geführt ist, wobei der Führungsstift in einem Dämpferelement verschiebbar geführt ist und das Dämpferelement, eine Trägerplatte, zumindest ein Holm und ein Gasgenerator miteinander fest verbunden sind, und dass die Kolbenstange des Gasgenerators mit zumindest einem Führungselement verbunden ist. Der besondere Vorteil dieser Ausführung ist, dass die Austriebsrichtung des Gasgenerators nicht gegen den Kopf des Insassen gerichtet ist und so mögliche Verletzungen durch den Gasgenerator ausgeschlossen sind.

Es ist zweckmäßig, wenn die beiden Führungselemente durch eine Führungsverbindung miteinander verbunden sind. Auf diese Weise wird eine synchrone Bewegung der beiden Führungen erzwungen und es kann zu keinem Verkanten kommen. Außerdem ist es so möglich, die Kolbenstange des Gasgenerators mit der Führungsverbindung zu verbinden, sodass er gleichmäßig auf beide Führungselemente wirkt.

Schließlich ist es zweckmäßig, dass die beiden Holme durch eine Holmverbindung miteinander verbunden sind und dass die ersten Verbindungsstreifen an dieser Holmverbindung angelenkt sind. Die Holmverbindung erhöht die Stabilität der gesamten Konstruktion und eröffnet eine einfache Möglichkeit, die ersten Verbindungsstreifen mit den Holmen zu verbinden.

Ausführungsbeispiele des Erfindungsgegenstandes sind in den beiliegenden Zeichnungen dargestellt.

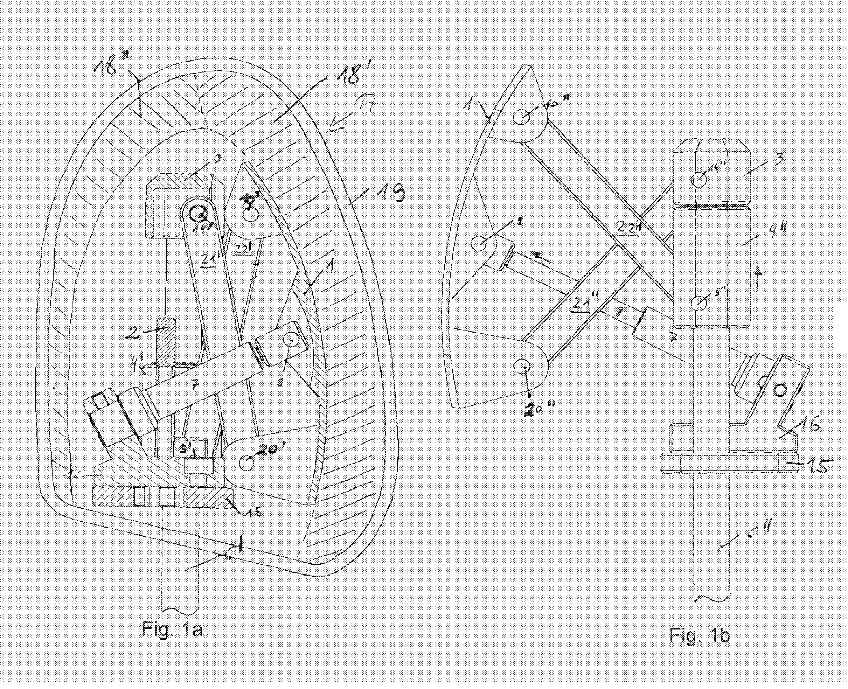

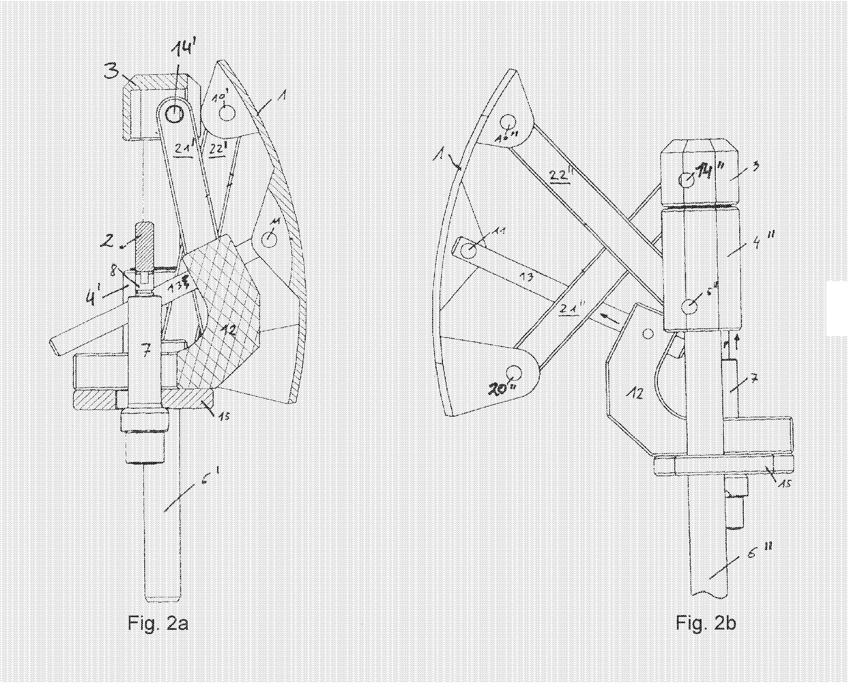

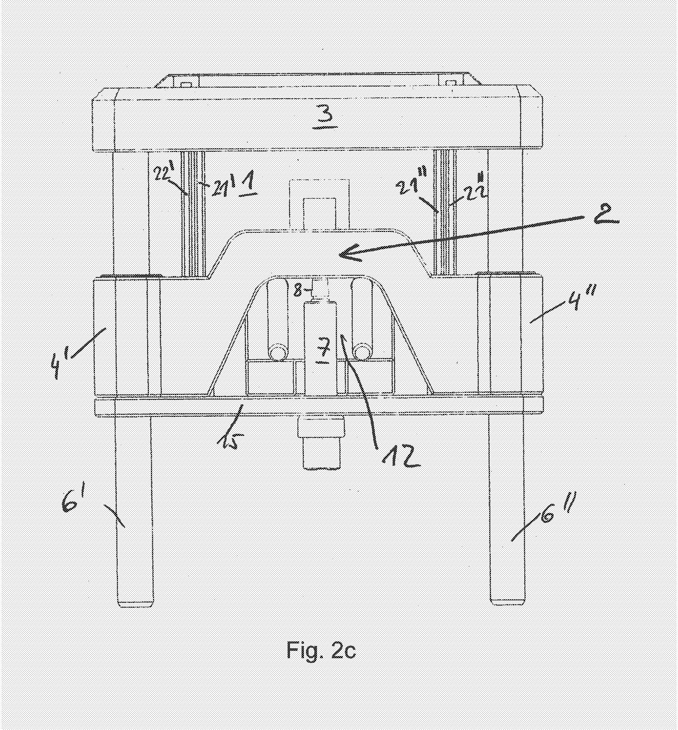

Fig. 1a zeigt den mechanischen Aufbau einer crashaktiven Kopfstütze mit einer Polsterhülle, wobei die Austreibrichtung des Zylinders des Gasgenerators der Bewegungsrichtung der Kopfstütze entspricht, in Seitenansicht von rechts; Fig. 1b die Kopfstütze gemäß Fig. 1a, jedoch ohne Polsterung und in ausgelöster Position, in Seitenansicht von links; Fig. 2a eine andere Ausführungsform mit einer vertikalen Austreibrichtung des Zylinders aus dem Gasgenerator, in Seitenansicht von rechts; Fig. 2b die Kopfstütze gemäß Fig. 2a in ausgelöster Position, in Seitenansicht von links; und Fig. 2c die Kopfstütze gemäß Fig. 2a, in Seitenansicht von hinten.

Fig. 1a und 1b zeigen eine Kopfstütze 17 für eine Rückenlehne, wie sie in jedem PKW vorgeschrieben ist, mit einer Mechanik und einem pyrotechnischen Gasgenerator 7. Die Kopfstütze 17 ist über zwei Holme 6', 6" an einer nicht dargestellten Rückenlehne befestigt. Die beiden Holme 6', 6" sind oben über eine Holmverbindung 3 und unten über eine Trägerplatte 15 miteinander verbunden. Auf der Trägerplatte 15 ist ein Verbindungselement 16 aufgebaut. Das Verbindungselement 16 ist mit einem Gasgenerator 7, der zur Aktivierung des Systems dient, starr verbunden. Wird der Gasgenerator 7 gezündet, fährt eine Kolbenstange 8 aus, die über ein Gelenk 9 mit der Frontplatte 1 verbunden ist. Die Frontplatte 1 ist gewölbt ausgeführt, um eine optimale Anpassung der Kopfstütze 17 an den menschlichen Hinterkopf zu erreichen. Ferner ist die Frontplatte 1 mit zwei ersten Verbindungsstreifen 21', 21" und zwei zweiten Verbindungsstreifen 22', 22" über drehbare Lager 20', 20" bzw. 10', 10" verbunden. Die beiden ersten Verbindungsstreifen 21', 21" sind mit den Holmen 6', 6", oder genauer mit der Holmverbindung 3, über drehbare Lager 14', 14" verbunden. Die beiden zweiten Verbindungsstreifen 22', 22" sind mit zwei Führungselementen 4', 4" über drehbare Lager 5', 5" verbunden, wobei sich die Verbindungsstreifen 21', 22'; 21", 22" sowohl der rechten Seite als auch der linken Seite jeweils kreuzen. Die Führungselemente 4, 4" sind wiederum an den Holmen 6', 6" verschiebbar angeordnet. Die Führungselemente 4', 4" ermöglichen somit ein Auf- und Abgleiten der zweiten Verbindungsstreifen 22', 22" auf den Holmen 6', 6" der Kopfstütze 17. Durch die beiden ersten Verbindungsstreifen 21', 21" und die beiden zweiten Verbindungsstreifen 22', 22" wird auf jeder Seite ein Gelenksviereck gebildet. Die Führung der Bewegung der ausgelösten Kopfstütze 17 wird durch die Geometrie der Gelenksvierecke und durch den Gasgenerator 7 sowie die ausfahrende Kolbenstange 8 bestimmt. Wird der Gasgenerator 7 von einer Crasherkennung aktiviert bzw. gezündet, fährt die Kolbenstange 8 aus und drückt die Frontplatte 1 vorwärts und nach oben. Die beiden zweiten Verbindungsstreifen 22', 22" gleiten mit den Führungselementen 4', 4" während der Verlagerung der Frontplatte 1 auf den Holmen 6', 6" in die obere Endlage. Der Gasgenerator 7 hat eine wesentliche Stabilisierungs- und Führungsfunktion während der Verlagerung der Kopfstütze 17. Der Neigungswinkel des Gasgenerators 7 zur Waagrechten gibt die Hauptbewegungsrichtung der Frontplatte 1 vor. Dadurch können je nach Anwendung verschiedene Werte für Vorwärts- und Aufwärtsbewegungen eingestellt werden. Die Frontplatte 1 und die Mechanik werden von einer Polsterung eingehüllt, die aus zwei Polsterteilen 18', 18" besteht. Eine typische Dicke der Polsterung ist 25 mm. Eine zu dünne Ausführung der Polsterung führt bei einem Unfall zu einem vollständigen Zusammendrücken durch den Kopf des Insassen. Der Kopf schlägt somit bei einer zu dünnen Polsterung 18', 18" auf den harten Teilen der Mechanik, insbesondere auf der gewölbten Frontplatte 1, was die Verletzungsgefahr bzw. die Schmerzbelastung des Insassen erhöht. Um der mechanischen Konstruktion der Kopfstütze 17 zu einer höheren Festigkeit bzw. Stabilität zu verhelfen, können die beiden Führungselemente 4' und 4" mit einer Führungsverbindung 2 verbunden sein. Die zweiten Verbindungsstreifen 22', 22" können in diesem Fall an dieser Führungsverbindung 2 angelenkt sein.

In Fig. 2a, 2b, 2c ist eine weitere Ausbildungsform der erfindungsgemäßen Kopfstütze 17 dargestellt. Der wesentliche Unterschied zu der in den Figuren 1a und 1b dargestellten Variante ist die nun vertikale Austriebsrichtung der Kolbenstange 8 aus dem Gasgenerator 7. Die Anordnung der Frontplatte 1, der Verbindungsstreifen 21', 21", 22', 22", der Holme 6', 6" und der verschiebbaren Führungselemente 4', 4" ist gleich wie bereits bei Fig. 1a, 1b beschrieben. Der Gasgenerator 7 mit der Kolbenstange 8 ist jedoch vertikal ausgerichtet und in der Trägerplatte 15 verankert. Bei Aktivierung des Gasgenerators 7 fährt die mit der Führungsverbindung 2 verbundene (und damit indirekt mit den Führungselementen 4', 4" verbundene) Kolbenstange 8 aus dem Gasgenerator 7 aus und verschiebt die Führungselemente 4', 4" entlang der Holme 6', 6" bis in die obere Endlage. Die Führung der Bewegung der Frontplatte 1 erfolgt durch einen Führungsstift 13, welcher durch ein Gelenk 11 mit der Frontplatte 1 verbunden sind und in einem Dämpferelement 12 verschiebbar geführt sind. Das Dämpferelement 12 dient somit als Linearführung des Führungsstifts 13.

Durch die Zündung des Gasgenerators 7 wird die Kolbenstange 8 aus dem Gasgenerator 7 ausgetrieben und die Führungselemente 4', 4" in die obere Endlage verschoben. Dadurch wird die Frontplatte 1 wegen der Verbindungsstreifen 21', 21", 22', 22" nach vorne verschoben und gleichzeitig angehoben. Die Linearführung des Führungsstifts 13 durch das Dämpferelement 12 gibt die Richtung der Vorwärts- und Aufwärtsbewegung vor. Erkenntnisse aus aktuellen Unfallanalysen fordern eine Vorverschiebung der Kopfstütze um mindestens 60 mm. Diese geforderte Verschiebung wird von der gegenständlichen Erfindung ausgeführt. Analog zu der oben genannten Ausführung kann dadurch die Bahnkurve wunschgemäß festgelegt werden. Von besonderer Bedeutung ist das Dämpferelement 12. Schlägt der Kopf auf die aktivierte Kopfstütze 17, so ist die Auftreffrichtung nicht koaxial mit der Linearführung des Führungsstifts 13. Dadurch kommt es zum Blockieren des Führungsstifts 13. Durch die bogenförmige Ausführung des Dämpferelementes 12 wirkt dieses im Aufprallfall des Kopfes wie eine Feder und nimmt Energie auf. Die Leitungsführung der Zündkabel, die die Crasherkennung mit den elektrischen Kontakten des Gasgenerators 7 verbinden, können in einem hohl ausgeführten rohrförmigen Holm 6', 6" verlegt werden.

Wie in der Fig. 1a dargestellt, besteht die Polsterung der Mechanik aus zwei Polsterteilen 18', 18". Durch einen gemeinsamen Bezug 19 werden die beiden Polsterteile 18', 18" in ihrer gewünschten Position gehalten. Auf diese Weise ist sichergestellt, dass die nach vorne bewegte Frontplatte 1 auch in ihrer endgültigen Position über eine Polsterung 18' verfügt. Da die Kopfstütze 17 ihre Stärke während der Vorverlagerung um den horizontalen Hub vergrößert, muss der Bezug 19 aus elastischem Material gefertigt werden. Dabei bieten sich besonders die Seitenflächen des Bezuges 19 für elastische Bezugseinsätze an.

Durch die kompakte Bauform ist es nun möglich, Fahrzeuge mit einer crashaktiven Kopfstütze 17 nachzurüsten, ohne den ganzen Sitz tauschen zu müssen.

## Patentansprüche

1. Pyrotechnisch aktivierbare Kopfstütze mit einer Crasherkennung, einer Pyrotechnik und einer die Kopfstütze verschiebenden Mechanik, **dadurch gekennzeichnet, dass** die Mechanik und die Pyrotechnik in der Kopfstütze (17) untergebracht sind.

2. Pyrotechnisch aktivierbare Kopfstütze nach Anspruch 1, **dadurch gekennzeichnet, dass** die Polsterung aus zwei durch die Pyrotechnik gegeneinander bewegbaren Polsterteilen (18', 18") besteht.

3. Pyrotechnisch aktivierbare Kopfstütze nach einem der Ansprüche 1 und 2, **dadurch gekennzeichnet, dass** beide Polsterteile (18', 18") mit einem gemeinsamen Bezug (19) umhüllt sind.

4. Pyrotechnisch aktivierbare Kopfstütze nach Anspruch 2 oder 3, **dadurch gekennzeichnet, dass** der vordere Polsterteil (18') durch die Pyrotechnik nach vorne oben bewegbar ist.

5. Pyrotechnisch aktivierbare Kopfstütze nach einem der Ansprüche 1 bis 4, **dadurch gekennzeichnet, dass** eine Frontplatte (1) mit zwei Holmen (6', 6") jeweils über einen ersten Verbindungsstreifen (21', 21") und einen zweiten Verbindungsstreifen (22', 22") verbunden ist, wobei der erste Verbindungsstreifen (21', 21") und der zweite Verbindungsstreifen (22', 22") einander kreuzen und ein Gelenksviereck bilden, dass ein holmseitiges Ende jedes ersten Verbindungsstreifens (21', 21") drehbar mit dem jeweiligen Holm (6', 6") verbunden ist, ein holmseitiges Ende jedes zweiten Verbindungsstreifens (22', 22") mit jeweils einem Führungselement (4', 4") verbunden ist, welches an dem jeweiligen Holm (6', 6") verschiebbar ist, und dass die bewegliche Frontplatte (1) von den ersten Verbindungsstreifen (21', 21"), den zweiten Verbindungsstreifen (22', 22") und einem Gasgenerator (7) mit einer Kolbenstange (8) geführt ist, wobei der Gasgenerator (7) an einem Verbindungselement (16) mit einer Trägerplatte (15) befestigt ist und die Trägerplatte (15) mit dem Verbindungselement (16) starr an zumindest einem der Holme (6', 6") befestigt ist (Fig. 1a, 1b)

6. Pyrotechnisch aktivierbare Kopfstütze nach einem der Ansprüche 1 bis 4, **dadurch gekennzeichnet, dass** eine Frontplatte (1) mit zwei Holmen (6', 6") jeweils über einen ersten Verbindungsstreifen (21', 21") und einen zweiten Verbindungsstreifen (22', 22") verbunden ist, wobei der erste Verbindungsstreifen (21', 21") und der zweite Verbindungsstreifen (22', 22") einander kreuzen und ein Gelenksviereck bilden, dass ein holmseitiges Ende jedes ersten Verbindungsstreifens (21', 21") drehbar mit dem jeweiligen Holm (6', 6") verbunden ist, ein holmseitiges Ende jedes zweiten Verbindungsstreifens (22', 22") mit jeweils einem Führungselement (4', 4") verbunden ist, welches an dem jeweiligen Holm (6', 6") verschiebbar ist, dass die bewegliche Frontplatte (1) von den ersten Verbindungsstreifen (21', 21"), den zweiten Verbindungsstreifen (22', 22") und einem Führungsstift (13) geführt ist, wobei der Führungsstift (13) in einem Dämpferelement (12) verschiebbar geführt ist und das Dämpferelement (12), eine Trägerplatte (15), zumindest ein Holm (6', 6") und ein Gasgenerator (7) miteinander fest verbunden sind, und dass die Kolbenstange (8) des Gasgenerators (7) mit zumindest einem Führungselement (4', 4") verbunden ist. (Fig. 2a, 2b)

7. Pyrotechnisch aktivierbare Kopfstütze nach einem der Ansprüche 5 oder 6, **dadurch gekennzeichnet, dass** die beiden Führungselemente (4',4") durch eine Führungsverbindung (2) miteinander verbunden sind.

8. Pyrotechnisch aktivierbare Kopfstütze nach Anspruch 6 und 7, **dadurch gekennzeichnet, dass** der Kolben (8) des Gasgenerators (7) mit der Führungsverbindung (2) verbunden ist.

9. Pyrotechnisch aktivierbare Kopfstütze nach einem der Ansprüche 5 bis 8, **dadurch gekennzeichnet, dass** die beiden Holme (6', 6") durch eine Holmverbindung (3) miteinander verbunden sind und dass die ersten Verbindungsstreifen (21', 21") an dieser Holmverbindung (3) angelenkt sind.
